# EUROPÄISCHE PATENTANMELDUNG

(11) **EP 0 926 580 A1**
(43) Veröffentlichungstag der Anmeldung: **30.06.1999**
(21) Anmeldenummer: 98890358.9
(22) Anmeldetag: 03.12.1998
(51) Int. Cl.: G05D 11/13

(54) **Verfahren und Vorrichtung zur Erzeugung präziser kontinuierlicher Mischgasströme**

(30) Priorität: 22.12.1997 AT 217097
(71) Anmelder: AVL Medical Instruments AG, 8207 Schaffhausen (CH)
(72) Erfinder: Rüther, Horst, Dipl.-Ing. Dr., 8047 Hart/Graz (AT); Raith, Roland, Dipl.-Ing., 8010 Graz (AT)
(74) Vertreter: Babeluk, Michael, Dipl.-Ing. Mag., Patentanwälte Babeluk - Krause

(57) **Zusammenfassung**

Bei einer Gasmischeinrichtung zur Erzeugung hochpräziser, kontinuierlicher Mischgasströme mehrerer anteilsmäßig einstellbarer Gaskomponenten (A, B, C), wobei je Gaskomponcnte eine Gasleitung (a, b, c) mit einem Druckreduzierelement (1) und gegebenenfalls einem Druckfeinregler (2) vorgesehen ist, ist zur Verbesserung der Präzision vorgesehen, daß jede der Gasleitungen (a, b, c) zu einem von einer elektronischen Steuerung (11) zeitlich getaktcten Ventil (5) führt, welche Ventile (5) eingangsseitig zum Druckausgleich über ein gemeinsam entlüftetes Leitungssystem (3) verbunden sind und ausgangsseitig über eine Mischgasleitung (8) mit einer nachgeschalteten Mischkammer (7) in Verbindung stehen.

## Beschreibung

Die Erfindung betrifft ein Verfahren zur Erzeugung präziser, kontinuierlicher Mischgasströme mehrerer anteilsmäßig einstellbarer Gaskomponenten, sowie eine Gasmischeinrichtung zur Erzeugung derartiger Mischgasströme, wobei je Gaskomponente eine Gasleitung mit einem Druckreduzierelement und gegebenenfalls einem Druckfeinregler vorgesehen ist.

Neben den klassischen Methoden zur Erzeugung von Gasgemischen (manometrisch, gravimetrisch, volumetrisch), wie sie vor allem für die Herstellung von Flaschengasen verwendet werden, sind auch einige Verfahren zur Erzeugung kontinuierlicher Mischgasströme bekannt.

Sehr verbreitet sind Systeme bzw. Verfahren, die den Durchfluß von Einzelgasen messen und regeln, z. B. über den Wärmeabtransport von vorgeheizten Elementen. Diese Systeme erreichen üblicherweise eine absolute Abweichung vom Sollwert des Mischverhältnisses von ca. 1%, wobei das Mischverhältnis über einen großen Bereich einstellbar ist.

Wesentlich präziser arbeiten Dosierpumpen, welche jedoch für einen kontinuierlichen Gasfluß kaum verwendbar sind, einem relativ raschen Verschleiß unterliegen und zudem kostspielig sind.

Eine weitere Alternative stellen Blendensysteme dar, wobei hochpräzise Blenden mit einer Gasdurchtrittsgeschwindigkeit, größer als die Schallgeschwindigkeit, verwendet werden. So ist beispielsweise aus der DE 21 23 961 eine Gasmischeinrichtung zur Erzeugung kontinuierlicher Mischgasströme mit vorbestimmtem Mischungsverhältnis bekannt, bei welcher je Gaskomponente eine Blendenanordnung mit vorgeschaltetem Druckfeinregler vorgesehen ist. Jede Blendenanordnung besteht aus zwei eingangsseitig parallel geschalteten Lochblenden, wobei jeweils eine Lochblende einer Gaskomponente mit einer Lochblende der anderen Gaskomponente ausgangsseitig zu einer Mischgasleitung verbunden ist.

Bei einem System mit zwei Primärgasquellen können durch diese Anordnung an der Entnahmeleitung Eichgase mit zwei fixen Mischungsverhältnissen entnommen werden. Derartige Systeme erreichen eine sehr hohe Genauigkeit (Abweichung im Mischungsverhältnis < 0,03%), eignen sich jedoch nur für Anwendungen, bei welchen einige wenige fixe Gasgemische benötigt werden.

Weiters sind Gasmischsysteme bekannt, die anstelle von Blenden hochpräzise Strömungswiderstände verwenden. Diese Vorrichtungen haben jedoch den Nachteil, empfindlich auf Änderungen des Sekundärdruckes zu reagieren.

Ein weiteres einfaches, technisches Konzept stellt die zeitlich gesteuerte Vermischung dar. Dabei erzeugen schnell schaltende Ventile Gassegmente, die in einer ausreichend dimensionierten Mischkammer zu einem homogenen Gasgemisch vermischt werden. Diese kostengünstigen und über einen großen Bereich einstellbaren Gasmischsysteme erzielen präzise Gasgemische mit einer Abweichung von den Sollwerten von < 0,2 %. Eine derartige Gasmischvorrichtung ist beispielsweise aus der DE 31 35 455 A1 bekannt. Über zwei Komponentenzuleitungen werden die zwei Gaskomponenten, beispielsweise Sauerstoff und Stickstoff, zur Erzielung eines vorgegebenen Mischungsverhältnisses zugeführt. Die beiden Komponentenzuleitungen sind mit einem pneumatisch steuerbaren Zweiwegeventil verbunden, welches durch einen Impulsgenerator taktweise und in der das Mischungsverhältnis bestimmenden vorgegebenen Impulsdauer jeweils eine der beiden Komponentenzuleitungen mit einer gemeinsamen Leitung verbindet. Die gemeinsame Leitung ist über einen Druckminderer mit einer Drosselstelle verbunden, deren Auslaß in einem Pufferbehälter mündet. Das Gasgemisch wird über eine Entnahmeleitung aus dem Pufferbehälter entnommen. Die mit einer derartigen Gasmischeinrichtung erzielbare Genauigkeit wird vor allem durch die Totzeit des Zweiwegeventils beim Umschalten von einer Gaskomponente auf die andere limitiert.

Aufgabe der vorliegenden Erfindung ist es, ein Verfahren zur Erzeugung hochpräziser, kontinuierlicher Mischgasströme sowie eine entsprechende Gasmischeinrichtung vorzuschlagen, welche(s) über einen großen Bereich einstellbar ist und trotzdem eine den Blendensystemen vergleichbare Genauigkeit erzielt.

Diese Aufgabe wird erfindungsgemäß dadurch gelöst,
a) daß der Eingangsdruck jeder Gaskomponente auf einen einstellbaren Nenndruck reduziert und gegebenenfalls feinreguliert wird,
b) daß die einzelnen Gaskomponenten zum Druckausgleich über ein gemeinsam entlüftetes Leitungssystem verbunden werden,
c) daß die einzelnen Gaskomponenten zeitlich getakteten Ventilen zugeführt werden,
d) daß die getakteten Ventile über eine Mischgasleitung mit einer nachgeschalteten Mischkammer verbunden werden.

Um zu gewährleisten, daß vor allen getakteten Ventilen der Vordruck gleich groß ist, werden die einzelnen Gaskomponenten über ein Leitungssystem scheinbar kurzgeschlossen. Um ein Vermischen der einzelnen Gaskomponenten in diesem Bereich zu vermeiden, wird das die einzelnen Gaskomponenten verbindende Leitungssystem über einen Druckregler entlüftet; weiters sind die Gasströme der einzelnen Gaskomponenten so ausgelegt, daß deren Volumensstrom immer größer ist als der Volumensstrom durch das jeweils geöffnete Taktventil. Das bedeutet, daß der Druckregler auch einen gewissen Prozentsatz jener Gaskomponente entlüftet, deren zugehöriges Ventil zum jeweiligen Zeitpunkt gerade geöffnet ist. Zu jedem Zeitpunkt des Mischvorganges werden jene Gaskomponenten, deren Taktventile geschlossen sind, durch den Druckregler entlassen. Man gewinnt dadurch eine besonders genaue Übereinstimmung des Druckes vor den einzelnen getakteten Ventilen.

In einer Weiterbildung der Erfindung ist vorgesehen, daß der Mischkammer eine gemeinsame Ausgangsblende vorgeschaltet wird, welche vom Mischgas mit einer Geschwindigkeit größer Schallgeschwindigkeit durchströmt wird. Durch diese Maßnahme wird das System unempfindlich gegenüber Sekundärdruckschwankungen, wodurch die Abweichung der Zusammensetzung des Mischgases vom Sollwert weiter verringert werden kann.

Betrachtet man z. B. den Umschaltvorgang von einer Gaskomponente A zu einer anderen Gaskomponente B, dann wird der neu zugeschalteten Komponente B die Strömungsgeschwindigkeit des vorher in der Mischgasleitung enthaltenen Gases A im ersten Moment aufgezwungen, da sich dieses im Blendenbereich befindet. Danach kommt es zu einer Vermischung und zu einer Änderung der Strömungsgeschwindigkeit, bis der Ausspülvorgang der Gaskomponente A abgeschlossen ist.

Erfindungsgemäß ist es nun von Vorteil, wenn die Taktrate der einzelnen getakteten Ventile unter Berücksichtigung der unterschiedlichen Gasparameter der einzelnen Gaskomponenten berechnet wird. Dadurch können unterschiedliche gasspezifische Strömungsfaktoren sowohl während der Phase der kontinuierlichen Strömung als auch zum Zeitpunkt des Umschaltens von einer Gaskomponente zur anderen berücksichtigt werden.

Eine weitere Steigerung der Genauigkeit des Mischverhältnisses ergibt sich erfindungsgemäß dann, wenn man die mechanische Schaltverzögerung der getakteten Ventile mißt und bei der Berechnung der Taktrate berücksichtigt. Beispielsweise ist es von Vorteil, bei elektromagnetisch geschalteten Taktventilen die Stromkennlinie der Ventile zur Erfassung der mechanischen Schaltverzögerung zu verwenden. Durch diese Maßnahme können Fehler, welche durch unterschiedliche Ansprechzeiten der einzelnen Ventile bzw. durch deren Verschleiß auftreten, beseitigt werden.

Um den Einfluß unterschiedlicher Umgebungstemperatur auf die Mischvorrichtung auszuschalten, kann diese bzw. zumindest die getakteten Ventile und Blenden auf gleichem Temperaturniveau gehalten werden. In einer kostengünstigen Ausführungsvariante ist es allerdings auch möglich, die Taktrate der einzelnen getakteten Ventile unter Berücksichtigung der Umgebungstemperatur zu berechnen.

Zur Beschleunigung der Schaltvorgänge ist es weiters von Vorteil, die getakteten Ventile zum Zeitpunkt des Schaltvorganges mit der mehrfachen, vorzugsweise mit der dreifachen Nennspannung zu betreiben.

Eine Gasmischeinrichtung zur Erzeugung hochpräziser, kontinuierlicher Mischgasströme weist somit je Gaskomponente eine Gasleitung mit einem Druckreduzierelement und gegebenenfalls einem Druckfeinregler auf, wobei erfindungsgemäß jede der Gasleitungen zu einem von einer elektronischen Steuerung zeitlich getakteten Ventil führt, welche Ventile zum Druckausgleich eingangsseitig über ein gemeinsam entlüftetes Leitungssystem verbunden sind und ausgangsseitig über eine Mischgasleitung mit einer nachgeschalteten Mischkammer in Verbindung stehen. Die getakteten Ventile sind ausgangsseitig mit einer gemeinsamen Ausgangsblende verbunden, welche in Strömungsrichtung vor der Mischkammer angeordnet ist.

Die hohe Präzision des erfindungsgemäßen Verfahrens bzw. der erfindungsgemäßen Gasmischeinrichtung wird durch mehrere Maßnahmen erreicht:
- Verwendung extrem schnell schaltender Ventile, die zum Zeitpunkt des Schaltvorganges mit der mehrfachen Nennspannung betrieben werden.
- Kompensation der mechanischen Schaltverzögerung.
- Berücksichtigung gasspezifisch unterschiedlicher Strömungsgeschwindigkeiten.
- Kompensation gasspezifisch unterschiedlicher Strömungsgeschwindigkeiten beim Umschalten von einer Gaskomponente zur anderen.
- Optimierung der Taktraten im Hinblick auf das gewählte Mischkammervolumen.
- Möglichst geringes Totvolumen zwischen den Ventilausgängen und der Blende bzw. Mischkammer.

Die Erfindung wird im folgenden anhand der schematischen Abbildung einer beispielhaften Ausführungsvariante näher erläutert.

Die dargestellte Gasmischeinrichtung zur Erzeugung hochpräziser, kontinuierlicher Mischgasströme weist je Gaskomponente A, B und C in den entsprechenden Gasleitungen a, b und c, jeweils ein Druckreduzierelement 1 und einen nachgeschalteten Druckfeinregler 2 (z. B. Nadelventil) auf. Jede der Gasleitungen a, b und c führt zu einem zeitlich getakteten Ventil 5, welche Ventile 5 eingangsseitig zum Druckausgleich über ein gemeinsam entlüftetes Leitungssystem 3 verbunden sind. Das Leitungssystem 3 wird über einen Druckregler 4, beispielsweise ein Überdruckventil, entlüftet, sobald das eingestellte Druckniveau überschritten wird. Ausgangsseitig sind die Ventile 5 über eine Mischgasleitung 8 mit kleinem Totvolumen mit einer gemeinsamen Ausgangsblende 6 verbunden, welche in eine Mischkammer 7 mündet. Der hochpräzise, kontinuierliche Mischgasstrom kann am Ausgang 9 der Mischkammer 7 entnommen werden; beim Ausgang 10 des Druckreglers 4 entweicht das Abgas während des Betriebes der Gasmischeinrichtung.

Wie bereits weiter oben ausgeführt, müssen alle zugeführten Gase so aufbereitet werden, daß der Vordruck (z. B. 2 bar) an allen getakteten Ventilen 5 für alle Gaskomponenten A bis C gleich groß ist. Dies erfolgt in vorteilhafter Weise durch Verwendung von Druckreduzierelementen und einem scheinbaren "Gaskurzschluß" 3. Um die gewünschte Vermischung zu erhalten, werden die einzelnen Gaskomponenten zeitlich getaktet durch die Ventile 5 freigegeben. Der Schaltvorgang jedes Ventils dauert nur 2 bis 4 ms und ist klein gegenüber der Offen- bzw. Schließzeit. Die Kompensation der mechanischen Schaltverzögerungen ist wesentlich für die Erzielung einer hohen Mischpräzision. Beispielsweise kann die elektronische Steuerung 11 für die Ventile 5 eine Meßeinrichtung 12 zur Erfassung der mechanischen Schaltverzögerung der einzelnen getakteten Ventile 5 aufweisen, beispielsweise eine Einrichtung zur Messung der Stromkennlinie elektromagnetisch geschalteter Taktventile. Da die mechanischen Schaltverzögerungen unterschiedlich von Ventil zu Ventil sind, empfiehlt sich die kontinuierliche Interpretation der Stromkennlinie zur Kompensation der Schaltverzögerungen oder zumindest die einmalige Bestimmung der typischen Schaltverzögerung durch ein geeignetes Meßverfahren.

Zur Berücksichtigung gasspezifisch unterschiedlicher Strömungsgeschwindigkeiten während der kontinuierlicher Strömung bzw. zum Zeitpunkt des Umschaltvorganges kann die elektronische Steuerung 11 ein Speicherelement 13 zur Ablage der unterschiedlichen Gasparameter (z. B. normierte Flow-Faktoren für N = 1,00, für CO₂= 0,79, für O₂= 0,94) der einzelnen Gaskomponenten sowie eine Einheit 14 zur Berechnung der Taktrate der einzelnen getakteten Ventile 5 in Abhängigkeit der unterschiedlichen Gasparameter aufweisen.

Betrachtet man das Totvolumen der Mischgasleitung 8 zwischen dem Ausgängen der getakteten Ventile 5 und der Ausgangsblende 6, dann ergeben sich für den Durchtritt durch die Blende 6 in Abhängigkeit vom Gastyp unterschiedliche Volumensströme, welche bei der Berechnung der Taktraten der Ventile berücksichtigt werden können.

Wenn man beispielsweise ein Mischgas mit 50% O₂ und 50% CO₂ herstellt, so ist aufgrund der unterschiedlichen Flow-Faktoren die Offenzeit des Taktventiles für O₂ kürzer als jene für CO₂. Weiters gehen in die Berechnung der Taktzeiten alle weiteren oben angeführten Tatsachen, wie unterschiedliche Strömungsgeschwindigkeiten beim Umschaltprozeß, Kompensation der mechanischen Schaltvorgänge, u. s. w. ein.

In der Mischkammer 7 erfolgt die Vermischung der einzelnen Gassegmente der Gaskomponenten A bis C zu einem homogenen Gasgemisch. Die Auslegung der Mischkammer bzw. deren Volumen sollte so groß wie möglich sein, wobei sich die maximale Größe durch eine vertretbare Zeitdauer für die Vermischung ergibt. Da extrem kurze Taktintervalle Abweichungen bei den Ventilschaltzeiten vervielfachen und extrem lange Taktintervalle die Homogenität des Mischgases verschlechtern, kann ausgehend von der gewählten Mischkammergröße das ideale Taktintervall berechnet werden. Gute Ergebnisse mit einer absoluten Abweichung vom Sollwert von <0,03% konnten mit einem Totvolumen der Mischgasleitung von 12µl und einem Taktintervall von 2s erzielt werden..

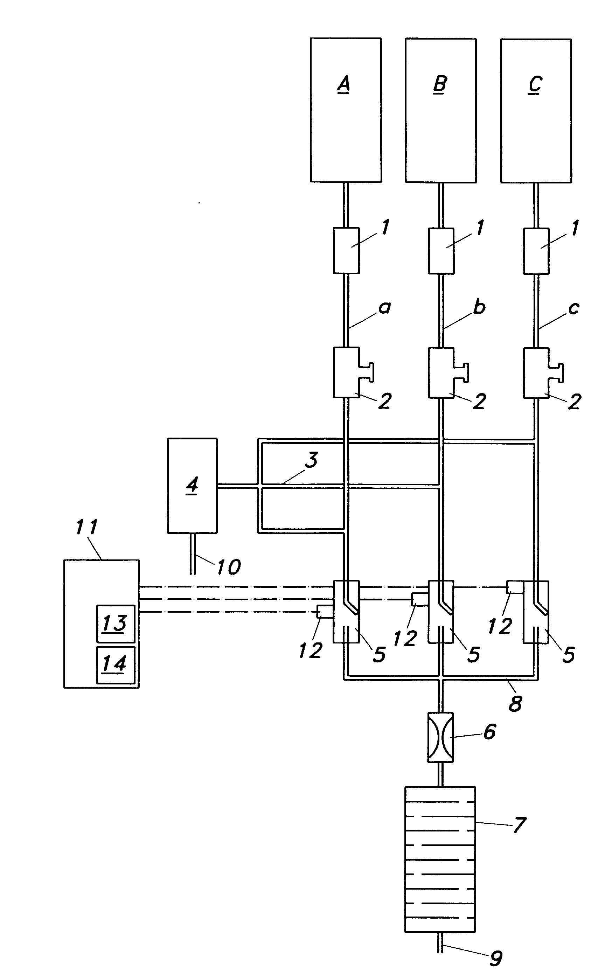

## Patentansprüche

1. Verfahren zur Erzeugung hochpräziser, kontinuierlicher Mischgasströme mehrerer anteilsmäßig einstellbarer Gaskomponenten, **dadurch gekennzeichnet,**
a) daß der Eingangsdruck jeder Gaskomponente auf einen einstellbaren Nenndruck reduziert und gegebenenfalls feinreguliert wird,
b) daß die einzelnen Gaskomponenten zum Druckausgleich über ein gemeinsam entlüftetes Leitungssystem verbunden werden,
c) daß die einzelnen Gaskomponenten zeitlich getakteten Ventilen zugeführt werden, und
d) daß die getakteten Ventile über eine Mischgasleitung mit einer nachgeschalteten Mischkammer verbunden werden.

2. Verfahren nach Anspruch 1, **dadurch gekennzeichnet**, daß der Mischkammer eine gemeinsame Ausgangsblende vorgeschaltet wird, welche vom Mischgas mit einer Geschwindigkeit größer der Schallgeschwindigkeit durchströmt wird.

3. Verfahren nach Anspruch 1 oder 2, **dadurch gekennzeichnet**, daß die Taktrate der einzelnen getakteten Ventile unter Berücksichtigung der unterschiedlichen Gasparameter der einzelnen Gaskomponenten berechnet wird.

4. Verfahren nach einem der Ansprüche 1 bis 3, **dadurch gekennzeichnet**, daß die mechanische Schaltverzögerung der getakteten Ventile gemessen und bei der Berechnung der Taktrate berücksichtigt wird.

5. Verfahren nach Anspruch 4, **dadurch gekennzeichnet**, daß bei Verwendung von elektromagnetisch geschalteten Taktventilen die Stromkennlinie der Ventile zur Erfassung der mechanischen Schaltverzögerung verwendet wird.

6. Verfahren nach einem der Ansprüche 1 bis 5, **dadurch gekennzeichnet**, daß die Taktrate der einzelnen getakteten Ventile unter Berücksichtigung der Umgebungstemperatur berechnet wird.

7. Verfahren nach einem der Ansprüche 1 bis 6, **dadurch gekennzeichnet**, daß die getakteten Ventile zum Zeitpunkt des Schaltvorganges mit der mehrfachen, vorzugsweise der dreifachen Nennspannung betrieben werden.

8. Gasmischeinrichtung zur Erzeugung hochpräziser, kontinuierlicher Mischgasströme mehrerer anteilsmäßig einstellbarer Gaskomponenten (A, B, C), wobei je Gaskomponente eine Gasleitung (a, b, c) mit einem Druckreduzierelement (1) und gegebenenfalls einem Druckfeinregler (2) vorgesehen ist, **dadurch gekennzeichnet**, daß jede der Gasleitungen (a, b, c) zu einem von einer elektronischen Steuerung (11) zeitlich getakteten Ventil (5) führt, welche Ventile (5) zum Druckausgleich eingangsseitig über ein gemeinsam entlüftetes Leitungssystem (3) verbunden sind und ausgangsseitig über eine Mischgasleitung (8) mit einer nachgeschalteten Mischkammer (7) in Verbindung stehen.

9. Gasmischeinrichtung nach Anspruch 8, **dadurch gekennzeichnet**, daß die getakteten Ventile (5) ausgangsseitig mit einer gemeinsamen Ausgangsblende (6) verbunden sind, welche in Strömungsrichtung vor der Mischkammer (7) angeordnet ist.

10. Gasmischeinrichtung nach Anspruch 8 oder 9, **dadurch gekennzeichnet**, daß die elektronische Steuerung (11) Speicher- (13) und/oder Sensorelemente zur Ablage und/oder Erfassung der unterschiedlichen Gasparameter der einzelnen Gaskomponenten (A, B, C), sowie eine Einheit (14) zur Berechnung der Taktrate der einzelnen getakteten Ventile (5) in Abhängigkeit der unterschiedlichen Gasparameter aufweist.

11. Gasmischeinrichtung nach einem der Ansprüche 8 bis 10, **dadurch gekennzeichnet**, daß die elektronische Steuerung (11) eine Meßeinrichtung (12) zur Erfassung der mechanischen Schaltverzögerung der einzelnen getakteten Ventile (5) aufweist, beispielsweise eine Einrichtung zur Messung der Stromkennlinie elektromagnetisch geschalteter Taktventile.
